# FASCICULE DE BREVET EUROPEEN

(11) **EP 4 367 791 B1**
(45) Date de publication et mention de la délivrance du brevet: **03.09.2025**
(21) Numéro de dépôt: 22747987.0
(22) Date de dépôt: 06.07.2022
(51) Int. Cl.: H02S 50/15

(54) **PROCEDE D'OPTIMISATION DE LA DUREE DE VIE D'UN MODULE PHOTOVOLTAIQUE BIFACIAL MULTIJONCTIONS ET MODULE OU PANNEAU PHOTOVOLTAIQUE ADAPTE A CE PROCEDE**
VERFAHREN ZUR OPTIMIERUNG DER LEBENSDAUER EINES ZWEISEITIGEN FOTOVOLTAISCHEN MODULS MIT MEHREREN ÜBERGÄNGEN UND FÜR DIESES VERFAHREN GEEIGNETES FOTOVOLTAISCHES MODUL ODER TAFEL
PROCESS FOR OPTIMISING THE SERVICE LIFE OF A BIFACIAL MULTIJUNCTION PHOTOVOLTAIC MODULE AND PHOTOVOLTAIC MODULE OR PANEL SUITED TO THIS PROCESS

(30) Priorité: 09.07.2021 FR 2107516
(43) Date de publication de la demande: 15.05.2024
(73) Titulaire: Electricité de France, 75008 Paris (FR); Centre National de la Recherche Scientifique (CNRS), 75016 Paris (FR); Ecole Polytechnique, 91120 Palaiseau (FR); TotalEnergies OneTech, 92400 Courbevoie (FR); Institut Photovoltaique D'Ile de France (IPVF), 91120 Palaiseau (FR)
(72) Inventeur: PUEL, Jean-Baptiste, 75014 PARIS (FR); JULIEN, Arthur, 92160 ANTONY (FR)
(74) Mandataire: Plasseraud IP
(86) Numéro de dépôt international: PCT/EP2022/068801
(87) Numéro de publication internationale: WO 2023/280949

(56) Documents cités:
- CN-A- 111 262 526
- CN-A- 111 865 217

## Description

### Domaine technique

La présente divulgation concerne un module photovoltaïque bifacial multi-jonction, c'est à dire un module comportant des cellules comportant un empilage de jonctions, par exemple un empilage comportant une sous-cellule pourvue de premières jonctions empilées, dont la dernière, placée à l'arrière, absorbe de la lumière par l'avant et l'arrière. Le document CN111865217A décrit un procédé pour dispositifs photovoltaïques .

### Technique antérieure

Aujourd'hui les technologies de modules multi-jonctions ayant atteint le stade industriel sont réservées à l'industrie du spatial du fait de leurs coûts élevés. Les modules multi-jonctions ne sont pas encore présents sur les marchés des installations terrestres (en fermes solaires, sur toiture, intégré au bâti, etc.) qui sont réalisées actuellement à base de cellules silicium monocristallin, polycristallin ou amorphe dans des modules simple face ou bifaciaux. De nombreux efforts de recherche et industriels sont développés pour rendre les technologies multi-jonctions accessibles et rentables pour un usage courant d'ici quelques années (champ PV, particuliers, etc.). Un aspect important pour améliorer la rentabilité de ces solutions est d'accroître leur durée de vie. Les cellules multi-jonctions composées de jonctions pérovskite et silicium sont notamment étudiées pour leurs bonnes performances. Or les cellules pérovskite ont une durée de vie aujourd'hui inférieure aux cellules traditionnelles silicium avec lesquelles elles peuvent être associées pour réaliser ces modules multi-jonctions, et les panneaux utilisant de tels modules n'ont pas une durée de vie optimisée.

### Problème technique

Dans un tel module multi-jonctions, les deux jonctions sont connectés en parallèle et liées optiquement. La lumière absorbée par la jonction inférieure est filtrée par la jonction supérieure. En conséquence, lorsque la jonction supérieure se dégrade, celle-ci continue de filtrer la jonction inférieure et en plus d'avoir des performances réduites, perturbe la production de cette dernière. De plus, la jonction supérieure peut perdre son pouvoir filtrant en se dégradant et devenir de plus en plus opaque, perturbant encore plus la jonction inférieure.

Par ailleurs, il est possible aujourd'hui, de concevoir des cellules comportant des jonctions ayant des taux de bifacialité élevés : la lumière perçue à l'arrière de la jonction est convertie avec un rendement quasiment aussi bon que la lumière perçue à l'avant de cette jonction.

### Exposé de l'invention

La présente divulgation propose un procédé ayant pour but d'accroître la durée de vie de multi-jonctions et des panneaux les comprenant et de leur donner une seconde vie.

Plus précisément la présente divulgation concerne un procédé d'optimisation de durée de vie d'un module photovoltaïque bifacial comportant au moins un empilement multi-jonctions, pour lequel une première face du module, sous laquelle se trouve une première couche de jonctions dudit empilement, est exposée au soleil en début de vie du module dans une position de base du module, dite position de première vie, et pour lequel une dernière couche de jonctions dudit empilement multi-jonctions, de type bifaciale est disposée sous une seconde face du module non exposée au soleil recevant une lumière diffuse et réfléchie sous le module ainsi qu'une partie de lumière traversant l'empilage, ce procédé comportant :
a. une mesure d'une première irradiance IRₛᵤₚ en face exposée au soleil du module et d'une seconde irradiance IR_{inf} en face non exposée au soleil du module, lorsque la première face du module est exposée au soleil;
b. une mesure d'une puissance P_{MC} de sortie du module complet;
c. un calcul d'une puissance P_{E1} estimée de sortie de chaque couche de jonctions de l'empilage multi-jonctions prise individuellement lorsque la première face est la face exposée au soleil;
d. un calcul d'une puissance estimée de sortie de ladite dernière couche de jonctions P_{DC} du module en fonction de la première irradiance dans une position retournée du module, dite position de seconde vie, où la seconde face du module devient la face exposée au soleil et la première face du module devient la face non exposée au soleil;
e. une comparaison de ladite puissance estimée de sortie de ladite dernière couche de jonctions Poc avec la puissance de sortie du module complet P_{MC} mesurée lorsque la première face est la face exposée au soleil du module,

pour émettre une recommandation de retournement du module lorsque la puissance de sortie du module complet P_{MC} dans la position de base devient inférieure à la puissance estimée de sortie de ladite dernière couche de jonctions Poc dans la position retournée du module.
Le procédé de la présente divulgation permet de prolonger la vie de panneaux photovoltaïques comportant des modules photovoltaïques à au moins deux jonctions empilées avec une jonction supérieure ou un empilage de jonctions supérieures laissant passer une partie du spectre lumineux vers une jonction inférieure de type bifaciale en les retournant lorsque une dégradation de jonctions photovoltaïques en partie supérieure du module devient trop importante tandis que la jonction inférieure reste utilisable avec un rendement suffisant.

Les caractéristiques exposées dans les paragraphes suivants correspondent à des modes de réalisation pouvant être mises en œuvre indépendamment les uns des autres ou en combinaison les uns avec les autres:

Le procédé peut comporter, en position de base, une comparaison de la puissance estimée de sortie dudit empilage de jonctions P_{EMP} à des données de puissance de sortie initiales P_{INI} dudit empilage de jonctions avec une même irradiance IR_{REF} pour déterminer une dégradation dudit empilage de jonctions.

Ceci permet d'affiner la détermination du moment où un retournement est souhaitable.

Les données de puissance de sortie initiales sont des couples irradiance/puissance IR_{REF}/P_{INI} pouvant être obtenus lors d'une étape préalable de mémorisation de couples irradiance/puissance obtenus pour diverses valeurs d'irradiance desdites jonctions en début de vie du module.

Ceci permet de déterminer le rendement du module pour différentes irradiances.

Le procédé peut s'arrêter à une génération d'une alerte pour un opérateur mais peut comporter avantageusement une étape de retournement du module.

Le procédé peut en outre comporter une période de surveillance de l'amélioration du rendement du module retourné et une étape de validation ou non dudit retournement en fonction de l'amélioration ou non dudit rendement. Ceci peut permettre par exemple de tester le retournement sur un premier module ou panneau avant de procéder au retournement d'autres panneaux d'une ferme solaire pour limiter les coûts de l'opération.

La présente divulgation concerne en outre un module photovoltaïque multi-jonctions adapté au procédé qui comporte un premier empilage d'une première couche de jonctions sous une première face du module et d'une dernière couche de jonctions bifaciales sous une seconde face du module, ladite première couche laissant passer une partie du spectre lumineux vers ladite seconde couche ou qui comporte un second empilage d'une pluralité de couches de jonctions de bandes interdites décroissantes à partir de ladite première face, dont la première couche est une première couche du module disposée sous ladite première face ledit second empilage étant disposé sur une dernière couche de jonctions bifaciales du module et laissant passer une partie du spectre lumineux depuis ladite première couche vers ladite dernière couche et qui comporte un dispositif d'inhibition d'au moins une des bornes de sortie des couches excepté ladite dernière couche lorsque le module est en position retournée avec ladite dernière couche exposée au soleil.

Le dispositif d'inhibition est utile pour éviter que les cellules ayant perdu de leur efficacité et situées sous le panneau après retournement perturbent le fonctionnement des cellules face au soleil après retournement.

Les jonctions des différentes couches peuvent être de surface différente ou les couches peuvent comporter un nombre de jonctions différent dans le but d'équilibrer les tensions de sortie des couches mises en parallèle.

Les jonctions de chacune des couches peuvent être reliées selon des réseaux série ou série/parallèle pour réaliser des réseaux à deux bornes de sortie par couche, lesdits réseaux série/parallèles étant adaptés à équilibrer les tensions de chacune des couches lorsque lesdits réseaux sont reliés en parallèle et lorsque la première couche est exposée au soleil et la dernière couche est non exposée au soleil.

Le dispositif d'inhibition peut être constitué d'une diode intercalée entre une borne de sortie du réseau de la dernière couche et les bornes de sortie de la ou des autres couches de l'empilage multi-jonction. Cette diode est orientée en sorte de bloquer le passage d'un courant depuis la dernière couche en position face au soleil vers les autres couches se trouvant dans ce cas sous la dernière couche.

Le dispositif d'inhibition peut aussi être constitué d'un strap amovible ou d'un interrupteur disposé entre une borne de sortie de la dernière couche et une regroupement de sorties des autres couches. Le strap sera retiré ou l'interrupteur mis en position ouverte lors du retournement du module ou du panneau le comprenant.

Le module est préférablement tel que les caractéristiques de vieillissement relatifs entre les couches du module sont telles que la dernière couche est adaptée, par retournement du module, à délivrer une puissance nominale supérieure au module entier lorsque la courbe de rendement en fonction du temps du module entier devient inférieur au rendement de la dernière couche en position face au soleil.

La présente divulgation concerne en outre un panneau photovoltaïque comportant au moins un module photovoltaïque tel que défini ci-dessus et comportant des plots ou contacts de sortie des réseaux du ou des modules à la fois en face supérieure et en face inférieure du module. Ceci simplifie le raccordement du panneau dans les deux sens de montage.

Le panneau peut comporter un cadre entourant le module, le cadre étant pourvu d'un profilé symétrique pourvu d'ailes s'étendant de part et d'autre de l'épaisseur du module en sorte de réaliser un cadre bas profil limitant l'ombrage projeté par le cadre tant lorsque le panneau est en position de base que lorsque le panneau est en position retournée. De cette façon les ailes du cadre ne créent pas plus d'ombrage lorsque le panneau est en position retournée qu' en position initiale.

Les ailes du cadre peuvent avantageusement être pourvues d'espaces de réception d'une boîte de jonction adaptée à se raccorder aussi bien aux plots ou contacts de sortie en face supérieure du module qu'aux plots on contacts de sortie en face inférieure du module en sorte de limiter un recouvrement d'une partie de la surface du panneau comportant les jonctions par ladite boîte de jonction. Ceci limite encore les phénomènes d'ombrage en position retournée comme en position de base.

Le panneau peut avantageusement comporter une paire de capteurs d'irradiance de chaque côté d'un plan du panneau.

La paire de capteurs d'irradiance peut être située sur un bras sur un côté externe du panneau.

La présente divulgation concerne en outre un programme informatique comportant des instructions pour la mise en œuvre du procédé lorsque ce programme est exécuté par un processeur.

La présente divulgation concerne enfin un support d'enregistrement non transitoire lisible par un ordinateur sur lequel est enregistré un programme pour la mise en œuvre du procédé.

### Brève description des dessins

D'autres caractéristiques, détails et avantages de l'invention apparaîtront à la lecture de la description détaillée ci-après d'exemples de réalisation non limitatifs, et à l'analyse des dessins annexés, sur lesquels :
[Fig. 1A], [Fig. 1B], [Fig. 1C] montrent un détail d'un module en coupe perpendiculaire à un plan du module selon trois phases de durée de vie et un premier mode de réalisation;
[Fig. 1D] montre un détail d'un module en coupe selon un second mode de réalisation d'un module dans une première position;
[Fig. 2A] montre un premier logigramme d'étapes de procédé selon la divulgation;
[Fig. 2B] montre un second logigramme d'étapes de procédé selon la divulgation.
[Fig. 3] montre un premier exemple d'empilage de couches de jonctions photovoltaïques;
[Fig. 4] montre un second exemple d'empilage de couches de jonctions photovoltaïques;
[Fig. 5] montre une première réalisation de panneau;
[Fig. 6] montre une seconde réalisation de panneau et son raccordement.

### Description des modes de réalisation

Les dessins et la description ci-après contiennent des éléments pouvant non seulement servir à mieux faire comprendre la présente invention, mais aussi contribuer à sa définition, le cas échéant.

Un module photovoltaïque multi-jonction est un module photovoltaïque comportant de cellules comportant soit deux couches de jonctions de technologies différentes empilées, dites cellules tandem, comme décrit par exemple dans le document US 9 287 431 B1, soit comportant un empilage de plus de deux couches de jonctions, comme des technologies de cellules multi-jonctions en matériaux III - V sur silicium telles que GalnP/AIGaAs/Si. Un tel module photovoltaïque est bifacial lorsque la dernière couche de jonctions est bifaciale, c'est-à-dire qu'elle comporte des jonctions bifaciales qui peuvent absorber la lumière filtrée par les couches supérieures et celle incidente sur la face arrière. L'empilage multi-jonctions comporte un empilage de jonctions combinant plusieurs matériaux absorbeurs à énergie de bande interdite différentes, jonctions par exemple de type p - n constituées de différents matériaux semi-conducteurs empilées, les différentes couches étant adaptées à produire un courant électrique en réponse à des parties du spectre de la lumière de longueur d'onde croissante depuis une première couche de jonctions directement exposée à la lumière vers une dernière couche de jonctions en profondeur. La dernière couche bifaciale absorbe alors la lumière par ses deux faces en réponse à un large spectre ce qui permet au module de produire de l'électricité en absorbant la lumière passant au travers de sa face exposée au soleil et traversant l'empilage, et en absorbant la lumière traversant sa face non exposée au soleil qui reçoit une lumière diffuse, réfléchie par le sol par exemple.

Pour un tel module, la ou les couches de jonctions de la face exposées à la lumière directe du soleil vont se dégrader plus rapidement que la dernière couche de jonctions côté face non exposée au soleil. Ceci est notamment dû à la technologie des cellules pour lesquelles les technologies multi-jonctions haut rendement utilisées pour la face exposée au soleil se dégradent plus vite que les technologies silicium traditionnelles mais aussi du fait de l'exposition à la lumière issue directement du soleil. La présente divulgation vise à profiter des performances de la dernière couche de jonctions, même lorsque les premières couches de jonctions sont dégradées. Pour cela le module est initialement positionné dans une position de base dite «position de première vie», avec la première couche de la cellule tandem ou les couches multi-jonctions côté face exposée au soleil et la dernière couche, de jonctions bifaciales, sous le module face non exposée au soleil, puis est retourné et installé dans une position retournée dite «position de seconde vie» où la couche de jonctions bifaciales se retrouve côté face exposée au soleil, la ou les autres couches multi-jonctions étant alors préférablement désactivées.

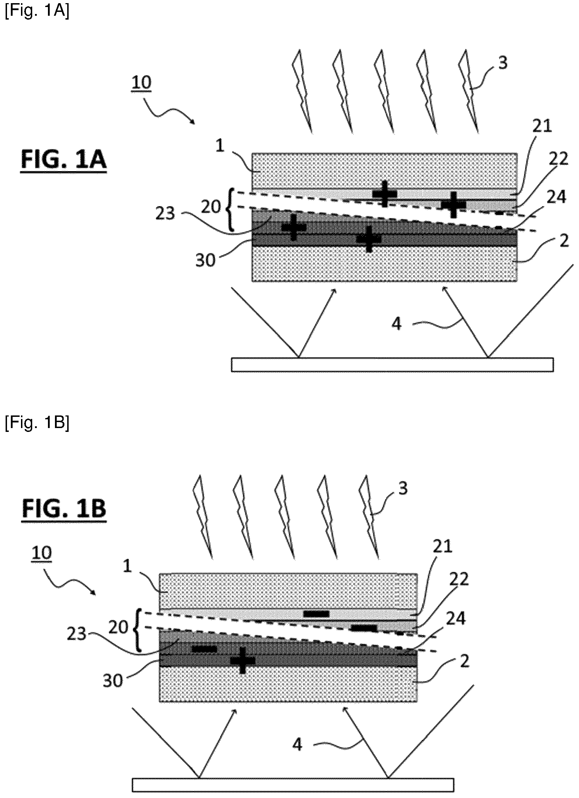

Les figures 1A à 1C illustrent schématiquement un segment de module multi-jonctions 10 vu en coupe perpendiculaire au plan du module.

En figure 1A est représentée la coupe du segment de module, en position de première vie. Le module 10 comporte une première face 1 réalisée avec un matériau transparent et qui est face au soleil dans ladite position de première vie. Sous la première face se trouve une première couche de jonctions 21 d'un empilage multi-jonctions 20. L'empilage comporte des couches de jonctions 21, 22, 23, 24 de bandes interdites décroissantes en s'éloignant de la première face, les couches inférieures absorbant les longueurs d'ondes croissantes non absorbées par les couches précédentes. Le module comporte une seconde face 2 réalisée avec un matériau transparent sous laquelle se trouve une dernière couche de jonctions bifaciales 30 (par convention on utilise la terminologie « sous laquelle » bien que selon l'orientation du schéma la dernière couche est représentée au-dessus de la seconde face). La dernière couche de jonctions 30 est ainsi positionnée entre la dernière couche 25 de l'empilage 20 et la seconde face 2 du module.

En début de vie du module, l'ensemble des jonctions produisent de l'électricité représentée par les signes +, les couches de jonctions de l'empilage 20 à partir de la lumière 3 reçue en face avant, et la couche de jonctions bifaciales 30 à partir de la partie de lumière traversant l'empilage et à partir de la lumière, par exemple diffuse et réfléchie 4, arrivant sous le module au travers de la seconde face 2.

Lorsque les jonctions de l'empilage 20 se dégradent comme représenté en figure 1B, l'électricité produite par ces couches se réduit comme représenté par les signes - alors que la couche de jonctions bifaciales 30 continue de produire de l'électricité à partir de la lumière reçue en face arrière.

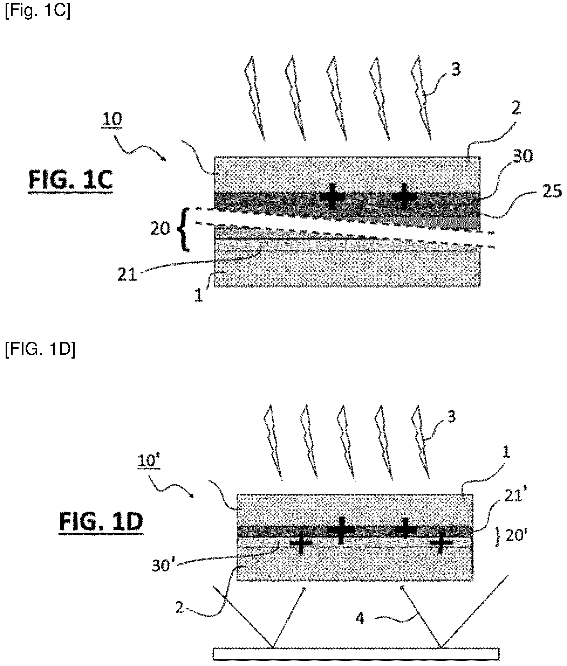

Ceci est aussi applicable à un module 10' pourvu de cellules tandem selon la figure 1D pour lequel l'empilement multi-jonctions 20' représenté dans la position initiale de première vie ne comporte alors qu'une première couche de jonctions 21' et une seconde et dernière couche de jonctions 30'.Un intérêt du procédé est donné ci-dessous dans le tableau 1 en rapport avec un exemple de simulation de dégradation pour un module ou panneau tandem, c'est à dire un module comportant côté exposé au soleil en position de base ou de première vie une première couche de jonctions laissant passer une partie du spectre et côté non exposé au soleil une seconde couche de jonctions bifaciales. Cet exemple permet de simuler le moment à partir duquel le retournement du module ou panneau est souhaitable.

Dans cet exemple de simulation, le taux de dégradation de la couche, ou jonction supérieure, de l'empilement, par exemple une couche à jonctions pérovskite, de rendement 20%, est par exemple de l'ordre de 1,7% par an. Celui de la couche, ou sous cellule, inférieure de l'empilement, par exemple une couche à jonctions silicium, de rendement 21% est par exemple de 0,5% par an, et la couche inférieure possède un taux de bifacialité élevé. Dans ce cas on peut estimer que la position module retourné, position de seconde vie pourra être intéressante après un certain nombre d'années de fonctionnement comme illustré par le tableau 1 qui donne les efficacités de la couche de jonctions supérieure, de la couche de jonctions inférieure, des deux couches ensemble et de la couche inférieure seule lorsque le module est retourné et que cette couche se retrouve face au soleil.

Cette estimation dépend des sous cellules considérées, des taux de dégradations réellement observés en conditions réelles pour le module concerné, du taux de bifacialité et d'autres paramètres.

**[Tableau 1]**

| Année | Efficacité couche supérieure | Efficacité sous couche inférieure | Efficacité en configuration première vie | Efficacité couche inférieure mise en face avant (configuration seconde vie) |
|---|---|---|---|---|
| 0 | 20,00 | 7,35 | 27,35 | 19,95 |
| 2 | 19,32 | 7,13 | 26,45 | 19,75 |
| 4 | 18,64 | 6,92 | 25,56 | 19,55 |
| 6 | 17,96 | 6,71 | 24,67 | 19,36 |
| 8 | 17,28 | 6,52 | 23,80 | 19,17 |
| 10 | 16,60 | 6,32 | 22,92 | 18,97 |
| 12 | 15,92 | 6,13 | 22,05 | 18,79 |
| 14 | 15,24 | 5,95 | 21,19 | 18,60 |
| 16 | 14,56 | 5,78 | 20,34 | 18,41 |
| 18 | 13,88 | 5,60 | 19,48 | 18,23 |
| 20 | 13,20 | 5,44 | 18,64 | 18,05 |
| 22 | 12,52 | 5,28 | 17,80 | 17,87 |
| 24 | 11,84 | 5,12 | 16,96 | 17,69 |
| 26 | 11,16 | 4,97 | 16,13 | 17,51 |
| 28 | 10,48 | 4,82 | 15,30 | 17,34 |
| 30 | 9,80 | 4,68 | 14,48 | 17,16 |

Il est donc intéressant, après un certain temps de fonctionnement en configuration position de première vie, de profiter uniquement de la couche inférieure et de ses performances restées intactes pour convertir la lumière sur la face exposée au soleil en configuration position de seconde vie. Dans cette configuration, la couche inférieure de l'empilage est alors positionnée au-dessus de sorte qu'elle puisse efficacement convertir toute la lumière perçue du côté exposé au soleil, la contribution de la lumière réfléchie côté non exposé n'est alors plus mise à profit.

Dans l'exemple du tableau ci-dessus, le passage en position retournée de seconde vie est théoriquement avantageux à partir de l'année 26. Toutefois, en fonction des conditions réelles d'utilisation des modules, il n'est pas possible, uniquement sur la base d'un taux théorique de dégradation, de prévoir le moment où retourner le module est souhaitable.

Cet exemple reste généralisable à toute configuration multi-jonctions avec couche inférieure bifaciale.

La présente divulgation propose un procédé permettant la détermination du moment où le module ou panneau doit être retourné. Le procédé utilise les mesures des irradiances perçues en face avant et arrière du module et des calculs basés sur les technologies de jonctions employées, la présente divulgation propose en particulier de calculer la puissance électrique fournie par les couches et la puissance électrique que fournirait la couche de jonctions bifaciales 30 si elle était en face avant et de déterminer le moment où il est intéressant de retourner le panneau, pour arriver à la configuration de la figure 1C panneau retourné où la couche de jonctions bifaciales 30 est mise en face exposée au soleil et ainsi optimiser la durée de vie du module ou du panneau comportant le module.

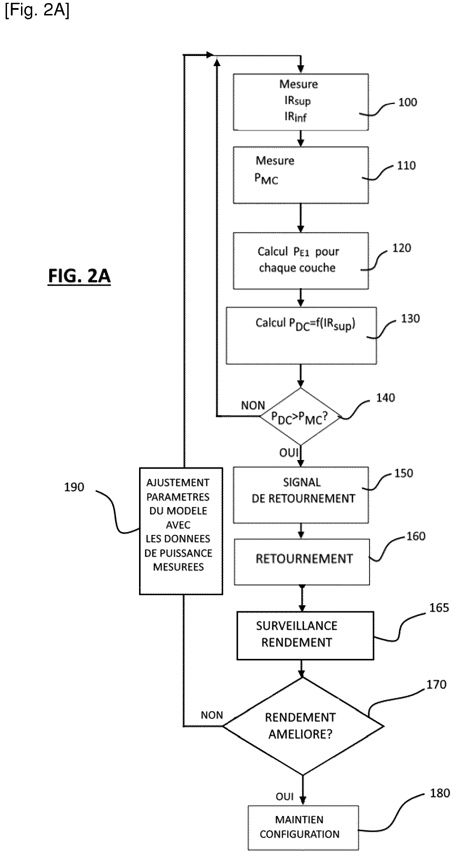

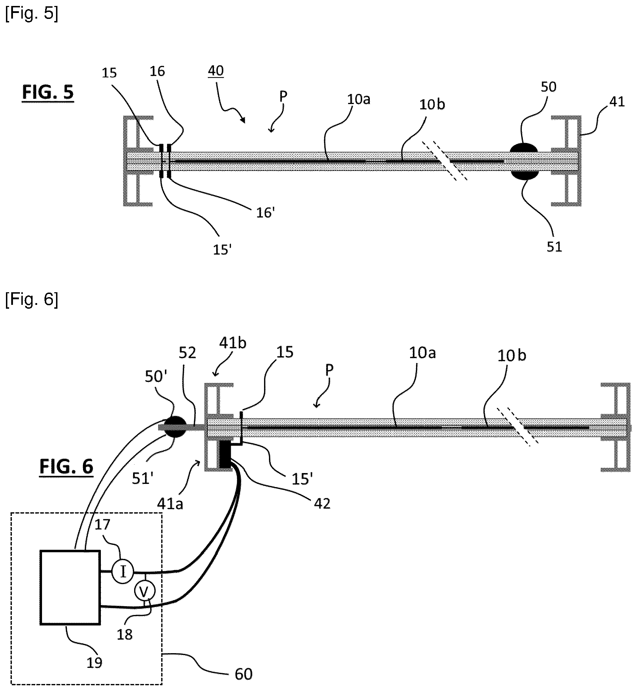

Le procédé pour ce faire comporte des étapes décrites en figure 2A et comporte en particulier:
a. une mesure 100 d'une première irradiance IRₛᵤₚ en face exposée au soleil du module et d'une seconde irradiance IR_{inf} en face ombragée du module, lorsque la première face est la face du module exposée au soleil dans une position de base dite position de première vie. Cette mesure va être réalisée avec des capteurs d'irradiance 50, 51 en face avant et en face arrière d'un panneau 40 comportant le module 10 et un cadre 41 comme par exemple représenté en figure 6;
b. une mesure 110 d'une puissance P_{MC} de sortie du module complet réalisée par une mesure 18 de la tension V et une mesure 17 du courant de sortie I du panneau comportant le module 10 toujours selon la figure 6;
c. un calcul 120 d'une puissance P_{E1} estimée de sortie de chaque couche de jonctions de l'empilage multi-jonctions prise individuellement lorsque la première face est la face exposée au soleil du module. Ce calcul va prendre en compte les caractéristiques physiques des jonctions qui déterminent la puissance restituée de chaque couche en fonction de l'irradiance;
d. un calcul 130 d'une puissance estimée Poc de sortie de ladite dernière couche de jonctions du module en fonction de la première irradiance dans une position retournée du module dite position de seconde vie où la seconde face du module devient la face exposée au soleil du module et la première face du module devient la face non exposée au soleil du module. Ce calcul va tenir compte des caractéristiques physiques de ladite dernière couche et de l'irradiance en face exposée au soleil;
e. une comparaison 140 de ladite puissance estimée de sortie de ladite dernière couche de jonctions avec la puissance de sortie du module complet mesurée lorsque la première face est la face exposée au soleil du module.

Ces mesures et calculs permettent, à l'étape 150 d'émettre une recommandation de retournement du module lorsque la puissance de sortie du module complet dans la position de première vie devient inférieure à la puissance estimée de sortie de ladite dernière couche de jonctions dans la position de seconde vie du module.

Lorsque le procédé a déterminé que le retournement du module est favorable, une étape de retournement 160 du module peut être réalisée ou planifiée par exemple lorsque l'ensemble ou une partie des panneaux d'un parc auront atteint une dégradation suffisante.

Le procédé de la présente divulgation permet d'affiner la détermination du moment un retournement du module est souhaitable en conditions d'utilisations réelles à partir du moment où on connait les irradiances en face exposée au soleil et en face non exposée au soleil et les caractéristiques physiques des jonctions constituant les cellules.

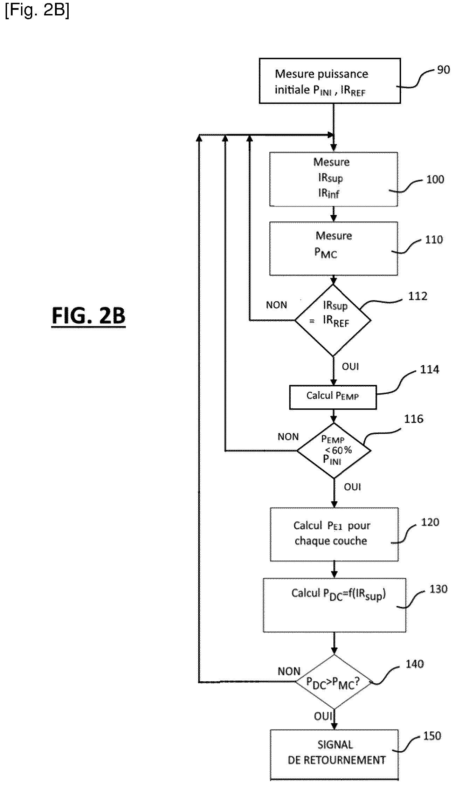

Pour améliorer l'estimation de la dégradation de la ou des couches supérieures en position de première vie et ainsi mieux définir le moment où le retournement est souhaitable, il est possible de réaliser une comparaison de la puissance estimée de sortie dudit empilage de jonctions P_{EMP} à des données de puissance de sortie initiales dudit empilage de jonctions P_{INI} mesurées à une étape préalable 90 avec une irradiance de référence IR_{REF} pour déterminer une dégradation des premières couches de jonctions, par exemple avant d'initier les calculs d'estimation précités. La figure 2B présente un tel processus avec en étape 90 la mesure et la mémorisation d'une ou plusieurs puissances initiales P_{INI} en fonction d'une ou plusieurs irradiances de référence IR_{REF}, en étape 112, après l'étape 110 de mesure de la puissance du module complet, une vérification de concordance de l'irradiation mesurée supérieure IRₛᵤₚ avec une irradiation de référence IR_{REF}, en cas de concordance, une étape de calcul de la puissance de l'empilement 114 puis une comparaison de la puissance de l'empilement avec un pourcentage de la puissance initiale P_{INI}, 60% selon l'exemple sans que ce soit limitatif, pour lancer les calculs de nécessité ou non du retournement.

Les données de puissance de sortie initiales sont des couples irradiance/puissance obtenus lors d'une étape préalable de mémorisation de couples irradiance/puissance obtenus pour diverses valeurs d'irradiance desdites jonctions en début de vie du module.

Le procédé peut ensuite comporter une période 165 de surveillance de l'amélioration du rendement du module retourné et une étape 170 de validation ou non dudit retournement. Dans le cas où le rendement n'a pas été amélioré, on peut dans ce cas revenir à la configuration en position de première vie en modifiant les paramètres de calcul de modèle du module ou panneau avec les données de rendement ou de puissance mesurées 190.

Si le rendement a été amélioré alors on maintien le retournement et la configuration position de seconde vie 180.

Le module est spécifiquement conçu pour pouvoir être soit en position de base soit retourné et installé en configuration position de seconde vie. Pour cela différentes solutions ont été mises en place et sont détaillées ci-dessous.

Comme vu précédemment, le module ou panneau comporte des cellules formées par un empilage de couches de jonctions de bandes interdites décroissantes à partir de ladite première face, les jonctions de cet empilement laissant passer une partie du spectre lumineux depuis les couches supérieures vers les couches inférieures, ledit empilage étant disposé sur une dernière couche de jonctions bifaciales du module.

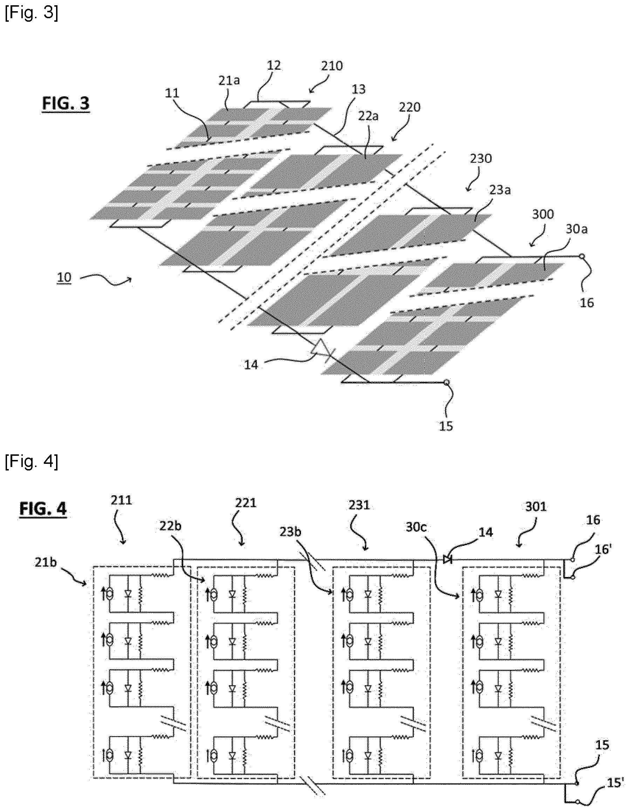

Selon l'exemple de la figure 3 les jonctions des différentes couches sont arrangées en sous-cellules de surface différente en vue d'équilibrer les tensions de sortie de chacune des couches en sorte de pouvoir les raccorder en parallèle.

Le module comporte dans ce mode de réalisation un empilage de trois couches 210, 220, 230 sur une couche bifaciale 300, les jonctions 21a, 22a, 23a de chaque couches, éventuellement de surface différentes, étant reliées en réseaux série/parallèle 11, 12 au niveau des couches pour réaliser des réseaux à deux bornes de sortie par couche et en parallèle 13 entre couches, de sorte que lesdits réseaux série/parallèles soient adaptés à équilibrer les tensions de chacune des couches lorsque lesdits réseaux sont reliés en parallèle et lorsque la première couche est face au soleil et la dernière couche reçoit une lumière réfléchie sous le module.

Comme il a été vu plus haut, selon la présente divulgation, les caractéristiques de vieillissement relatifs entre les couches du module sont telles que la dernière couche, la couche bifaciale, est adaptée, par retournement du module, à délivrer une puissance nominale supérieure au module entier lorsque la courbe de rendement en fonction du temps du module entier devient inférieur au rendement de la dernière couche en position face au soleil.

Lorsque le module est retourné, il faut éviter que la ou les jonctions de l'empilage multi-jonctions qui ne produisent plus d'électricité perturbent le fonctionnement de la couche bifaciale. Pour ce faire, selon l'exemple, un dispositif d'inhibition d'au moins une des bornes de sortie des couches de l'empilage multi-jonctions, excepté ladite dernière couche, lorsque le module est positionné avec la dernière couche placée face au soleil, est constitué ici d'une diode 14.

Le dispositif d'inhibition peut aussi être constitué d'un strap amovible ou d'un interrupteur.

La figure 4 représente un autre mode de réalisation représenté par son schéma électrique pour lequel les jonctions 21b, 22b, 23c et 30c sont en nombre identique par couche et reliées en série dans les couches, les couches 211 , 221, 231 de l'empilage multi-jonctions étant reliées en parallèle par des liaisons 13, la diode 14 entre les connexions des couches de l'empilage multi-jonctions et la couche de jonctions bifaciales 300 permettant d'inhiber les couches non actives lors du retournement du module ou panneau et la connexion de ce dernier au travers des bornes de sortie 15, 16.

Des configurations différentes de celles des figures 3 et 4 sont possibles en fonction des technologies de jonctions employées et notamment les modules peuvent comporter plus ou moins de trois couches de jonctions empilées sur la couche de jonction bifaciales et les arrangements de connexions des jonctions dans les couches peuvent différer en fonction des tensions de sortie des jonctions, des matériaux employés et méthodes de fabrication.

La figure 5 représente un exemple de panneau photovoltaïque 40 pourvu d'un ou plusieurs modules photovoltaïques 10a, 10b comportant des empilages de jonctions selon la présente divulgation vu de côté en coupe. Le panneau comporte une paire de capteurs d'irradiance 50, 51 pour réaliser les mesures d'irradiance du procédé. Les capteurs de la paire de capteurs sont disposés de chaque côté d'un plan P du panneau et positionnés sur une partie du panneau dépourvue de jonctions pour limiter les risques d'ombrage. Ces capteurs sont reliés à des moyens de calcul tels que les moyens 60 de la figure 6 pour permettre au procédé de calculer les irradiances et mettre en œuvre le procédé.

Toujours pour réduire les phénomènes d'ombrage mais aussi le rayonnement direct du cadre lorsque le panneau est retourné le cadre 41 du panneau comporte des ailes symétriques par rapport au plan P du panneau. De même pour permettre une connexion du panneau par la face inférieure, le panneau comporte des plots ou contacts de sortie des réseaux à la fois en face supérieure 15, 16 et en face inférieure 15', 16' du module.

Le cadre est ainsi un cadre bas profil limitant l'ombrage projeté par le cadre aussi bien lorsque le panneau est en position de première vie que lorsque le panneau est en position de seconde vie.

Selon la figure 5, les ailes 41a, 41b du cadre 41 sont pourvues d'espaces de réception d'une boîte de jonction 42 adaptée à se raccorder aussi bien aux plots ou contacts de sortie en face supérieure du module qu'aux plots ou contacts de sortie en face inférieure du module. Ceci limite encore le recouvrement d'une partie de la surface du panneau comportant les jonctions par ladite boîte de jonction et diminue les risques d'ombrage du panneau.

La boîte de jonction se raccorde à un module de contrôle 19 pourvu de moyens de mesure de courant 17 et de tension 18 et des moyens de calcul : processeur, mémoire programme, mémoire travail, le programme informatique comportant des instructions pour la mise en œuvre du procédé lorsque ce programme est exécuté par ledit processeur, les moyens de calcul recevant ou comportant éventuellement un support d'enregistrement non transitoire lisible par un ordinateur sur lequel est enregistré un programme pour la mise en œuvre du procédé lorsque ce programme est exécuté par ledit processeur.

Dans le mode de réalisation de la figure 6, la paire de capteurs d'irradiance 50', 51' est située sur un bras 52 sur un côté externe du panneau, les capteurs étant disposés respectivement de part et d'autre du plan P du panneau. Cette configuration limite encore les risques d'ombrage sur le ou les modules du panneau en configuration première vie et seconde vie.

Outre le procédé, la présente divulgation propose ainsi un système photovoltaïque, panneau ou module, pouvant être utilisé en deux configurations : position de première vie ou position de seconde vie, en fonction des performances du module. Il est conçu de façon à fonctionner de manière optimale dans les deux configurations pour prolonger la durée de vie du système.

L'invention ne se limite pas aux exemples décrits ci-avant, seulement à titre d'exemple, mais elle englobe toutes les variantes que pourra envisager l'homme de l'art dans le cadre de la protection recherchée et par exemple le panneau décrit peut être orientable sur un ou deux axes de rotation pour effectuer un suivi et une optimisation du rendement du panneau selon les irradiances reçues en face supérieure et en face inférieure.

En termes d'applications ou de marchés, le procédé et les modules et panneaux de la présente divulgation s'appliquent tout autant aux installations solaires au sol par exemple de type fermes solaires qu'aux installations en hauteur comme les installations photovoltaïques sur les toits, ce qui représente un avantage supplémentaire.

## Revendications

1. Procédé d'optimisation de durée de vie d'un module photovoltaïque (10, 10') bifacial comportant au moins un empilage multi-jonctions (20, 20'), pour lequel une première face du module, sous laquelle se trouve une première couche de jonctions (21) dudit empilage, est exposée au soleil en début de vie du module dans une position de base du module, dite position de première vie, et pour lequel une dernière couche de jonctions (30) dudit empilage multi-jonctions, de type bifaciale est disposée sous une seconde face du module non exposée au soleil recevant une lumière diffuse et réfléchie sous le module ainsi qu'une partie de lumière traversant l'empilage, **caractérisé en ce qu'**il comporte :
a. une mesure (100) d'une première irradiance IRₛᵤₚ en face exposée au soleil du module et d'une seconde irradiance IR_{inf} en face non exposée au soleil du module, lorsque la première face du module est exposée au soleil;
b. une mesure (110) d'une puissance P_{MC} de sortie du module complet;
c. un calcul (120) d'une puissance P_{E1} estimée de sortie de chaque couche de jonctions de l'empilage multi-jonctions prise individuellement lorsque la première face est la face exposée au soleil;
d. un calcul (130) d'une puissance estimée de sortie de ladite dernière couche de jonctions P_{DC} du module en fonction de la première irradiance dans une position retournée du module, dite position de seconde vie, où la seconde face du module devient la face exposée au soleil et la première face du module devient la face non exposée au soleil;
e. une comparaison (140) de ladite puissance estimée de sortie de ladite dernière couche de jonctions P_{DC} avec la puissance de sortie du module complet P_{MC} mesurée lorsque la première face est la face exposée au soleil du module,
pour émettre une recommandation de retournement (150) du module lorsque la puissance de sortie du module complet P_{MC} dans la position de base devient inférieure à la puissance estimée de sortie de ladite dernière couche de jonctions P_{DC} dans la position retournée du module.

2. Procédé d'optimisation selon la revendication 1, comportant, en position de base, une comparaison (116) de la puissance estimée de sortie dudit empilage de jonctions P_{EMP} à des données de puissance de sortie initiales P_{INI} dudit empilage de jonctions avec une même irradiance IR_{REF} pour déterminer une dégradation dudit empilage de jonctions.

3. Procédé d'optimisation selon la revendication 2, pour lequel les données de puissance de sortie initiales sont des couples irradiance/puissance IR_{REF}/P_{INI} obtenus lors d'une étape préalable (90) de mémorisation de couples irradiance/puissance obtenus pour diverses valeurs d'irradiance desdites jonctions en début de vie du module.

4. Procédé d'optimisation selon l'une quelconque des revendications précédentes, comportant une étape de retournement (160) du module.

5. Procédé d'optimisation selon la revendication 4, comportant une période de surveillance (165) de l'amélioration du rendement du module retourné et une étape de validation ou non (170) dudit retournement en fonction de l'amélioration ou non dudit rendement.

6. Module photovoltaïque multi-jonctions adapté au procédé de l'une quelconque des revendications précédentes, **caractérisé en ce qu'**il comporte un premier empilage d'une première couche de jonctions sous une première face du module et d'une dernière couche de jonctions bifaciales sous une seconde face du module, ladite première couche laissant passer une partie du spectre lumineux vers ladite dernière couche ou un second empilage (20) d'une pluralité de couches de jonctions de bandes interdites décroissantes (21, 22, 23, 24) à partir de ladite première face, dont la première couche (21) est une première couche du module disposée sous ladite première face, ledit second empilage étant disposé sur une dernière couche de jonctions bifaciales (30) du module et laissant passer une partie du spectre lumineux depuis ladite première couche vers ladite dernière couche et **en ce qu'**il comporte un dispositif d'inhibition (14) d'au moins une des bornes de sortie de ladite première couche ou de ladite pluralité de couches de bandes interdites décroissantes (21, 22, 23, 24) excepté ladite dernière couche (300, 301) lorsque le module est en position retournée avec ladite dernière couche exposée au soleil.

7. Module photovoltaïque selon la revendication 6, pour lequel les jonctions des différentes couches (2, 22, 23, 30) sont de surface différente ou pour lequel les couches comportent un nombre de jonctions différent.

8. Module photovoltaïque selon la revendication 6 ou 7, pour lequel les jonctions (21a, 22a, 23a, 30a, 21b, 22b, 23b, 30b) de chacune des couches (210, 220, 230, 300, 211, 221, 231, 301) sont reliées selon des réseaux série ou série/parallèle pour réaliser des réseaux à deux bornes de sortie par couche, lesdits réseaux série/parallèles étant adaptés à équilibrer les tensions de chacune des couches lorsque lesdits réseaux sont reliés en parallèle et lorsque la première couche est exposée au soleil et la dernière couche est non exposée au soleil.

9. Module photovoltaïque selon l'une quelconque des revendications 6 à 8, pour lequel le dispositif d'inhibition est constitué d'une diode intercalée entre une borne de sortie du réseau de la dernière couche et les bornes de sortie de la ou des autres couches de l'empilage multi-jonction.

10. Module photovoltaïque selon l'une quelconque des revendications 6 à 9, pour lequel le dispositif d'inhibition est constitué d'un strap amovible ou d'un interrupteur.

11. Module photovoltaïque selon l'une quelconque des revendications 6 à 10 pour lequel les caractéristiques de vieillissement relatifs entre les couches du module sont telles que la dernière couche est adaptée, par retournement du module, à délivrer une puissance nominale supérieure au module entier lorsque la courbe de rendement en fonction du temps du module entier devient inférieur au rendement de la dernière couche en position face au soleil.

12. Panneau photovoltaïque (40) comportant au moins un module photovoltaïque (10a, 10b) selon l'une quelconque des revendications 6 à 11et comportant des plots ou contacts de sortie (15, 15', 16, 16') des réseaux du ou des modules à la fois en face supérieure et en face inférieure du module.

13. Panneau photovoltaïque (40) comportant au moins un module photovoltaïque selon l'une quelconque des revendications 6 à 11, comportant un cadre (41) entourant le module, pour lequel le cadre est pourvu d'un profilé symétrique pourvu d'ailes (41a, 41b) s'étendant de part et d'autre de l'épaisseur du module en sorte de réaliser un cadre bas profil limitant l'ombrage projeté par le cadre tant lorsque le panneau est en position de base que lorsque le panneau est en position retournée.

14. Panneau photovoltaïque selon les revendications 12 et 13, pour lequel les ailes du cadre sont pourvues d'espaces de réception d'une boîte de jonction (42) adaptée à se raccorder aussi bien aux plots ou contacts de sortie (15, 16) en face supérieure du module qu'aux plots on contacts de sortie (15', 16') en face inférieure du module en sorte de limiter un recouvrement d'une partie de la surface du panneau comportant les jonctions par ladite boîte de jonction.

15. Panneau photovoltaïque selon l'une quelconque des revendications 12 à 14, comportant une paire de capteurs d'irradiance (50, 51, 50', 51') de chaque côté d'un plan (P) du panneau.

16. Panneau photovoltaïque selon la revendication 15, pour lequel la paire de capteurs d'irradiance (50', 51') est située sur un bras (52) sur un côté externe du panneau.

17. Programme informatique comportant des instructions pour la mise en œuvre du procédé selon l'une quelconque des revendications 1 à 5 lorsque ce programme est exécuté par un processeur.

18. Support d'enregistrement non transitoire lisible par un ordinateur sur lequel est enregistré un programme pour la mise en œuvre du procédé selon l'une quelconque des revendications 1 à 5 lorsque ce programme est exécuté par un processeur.

## Patentansprüche

1. Verfahren zur Optimierung der Lebensdauer eines bifazialen Photovoltaikmoduls (10, 10') mit wenigstens einem Mehrfachverbindungsstapel (20, 20'), wobei eine erste Seite des Moduls, unter der sich eine erste Verbindungsschicht (21) des Stapels befindet, zu Beginn der Lebensdauer des Moduls in einer Grundposition des Moduls, der sogenannten Position ersten Lebens, der Sonne ausgesetzt ist, und wobei eine letzte Verbindungsschicht (30) des Mehrfachverbindungsstapels vom bifazialen Typ unter einer zweiten, nicht der Sonne ausgesetzten Seite des Moduls angeordnet ist, die diffuses und unter dem Modul reflektiertes Licht sowie einen Teil des den Stapel durchdringenden Lichts empfängt, **dadurch gekennzeichnet, dass** es umfasst:
a. eine Messung (100) einer ersten Strahlungsintensität IRₛᵤₚ auf der der Sonne ausgesetzten Seite des Moduls und einer zweiten Strahlungsintensität IR_{inf} auf der der Sonne nicht ausgesetzten Seite des Moduls, wenn die erste Seite des Moduls der Sonne ausgesetzt ist;
b. eine Messung (110) einer Ausgangsleistung P_{MC} des gesamten Moduls;
c. eine Berechnung (120) einer geschätzten Ausgangsleistung P_{E1} jeder einzelnen Verbindungsschicht des Mehrfachverbindungsstapels, wenn die erste Seite die der Sonne ausgesetzte Seite ist;
d. eine Berechnung (130) einer geschätzten Ausgangsleistung der letzten Verbindungsschicht P_{DC} des Moduls in Abhängigkeit von der ersten Strahlungsintensität in einer umgedrehten Position des Moduls, der sogenannten Position zweiten Lebens, in der die zweite Seite des Moduls zur der der Sonne ausgesetzten Seite wird und die erste Seite des Moduls zu der der Sonne nicht ausgesetzten Seite wird;
e. einen Vergleich (140) der geschätzten Ausgangsleistung der letzten Verbindungsschicht P_{DC} mit der Ausgangsleistung des gesamten Moduls P_{MC}, gemessen, wenn die erste Seite die der Sonne ausgesetzte Seite des Moduls ist,
um eine Empfehlung zum Umdrehen (150) des Moduls auszugeben, wenn die Ausgangsleistung des kompletten Moduls P_{MC} in der Grundposition geringer wird als die geschätzte Ausgangsleistung der letzten Verbindungsschicht P_{DC} in der umgedrehten Position des Moduls.

2. Optimierungsverfahren nach Anspruch 1, umfassend in der Grundposition einen Vergleich (116) der geschätzten Ausgangsleistung des Verbindungsstapels P_{EMP} mit anfänglichen Ausgangsleistungsdaten P_{INI} des Verbindungsstapels mit gleicher Strahlungsintensität IR_{REF}, um eine Verschlechterung des Verbindungsstapels zu bestimmen.

3. Optimierungsverfahren nach Anspruch 2, wobei die anfänglichen Leistungsdaten Strahlungsintensität-/Leistung-Paare IR_{REF}/P_{INI} sind, die in einem vorherigen Schritt (90) zum Speichern von Strahlungsintensität-/Leistung-Paaren erhalten wurden, die für verschiedene Strahlungsintensitätwerte der Verbindungen zu Beginn der Lebensdauer des Moduls erhalten wurden.

4. Optimierungsverfahren nach einem der vorhergehenden Ansprüche, umfassend einen Schritt des Umdrehens (160) des Moduls.

5. Optimierungsverfahren nach Anspruch 4, umfassend eine Überwachungsphase (165) der Leistungsverbesserung des umgedrehten Moduls und einen Schritt der Validierung oder Nichtvalidierung (170) des Umdrehens in Abhängigkeit von der erfolgten oder nicht erfolgten Leistungsverbesserung.

6. Mehrfachverbindungs-Photovoltaikmodul, das für das Verfahren nach einem der vorhergehenden Ansprüche ausgebildet ist, **dadurch gekennzeichnet, dass** es einen ersten Stapel aus einer ersten Verbindungsschicht unter einer ersten Seite des Moduls und einer letzten bifazialen Verbindungschicht unter einer zweiten Seite des Moduls umfasst, wobei die erste Schicht einen Teil des Lichtspektrums zu der letzten Schicht durchlässt oder einem zweiten Stapel (20) einer Mehrzahl von Verbindungsschichten mit abnehmender Bandlücke (21, 22, 23, 24) von der ersten Seite aus, wobei die erste Schicht (21) eine erste Schicht des Moduls ist, die unter der ersten Seite angeordnet ist, wobei der zweite Stapel auf einer letzten Schicht aus bifazialen Verbindungen (30) des Moduls angeordnet ist und einen Teil des Lichtspektrums von der ersten Schicht zur letzten Schicht durchlässt, und dadurch, dass er eine Sperrvorrichtung (14) wenigstens eines der Ausgangsanschlüsse der ersten Schicht oder der Mehrzhal von Schichten aus abnehmenden Sperrstreifen (21, 22, 23, 24) umfasst, mit Ausnahme der letzten Schicht (300, 301), wenn das Modul umgedreht ist und die letzte Schicht der Sonne ausgesetzt ist.

7. Photovoltaikmodul nach Anspruch 6, wobei die Verbindungen der verschiedenen Schichten (2, 22, 23, 30) unterschiedliche Oberflächen aufweisen oder wobei die Schichten eine unterschiedliche Anzahl von Verbindungen aufweisen.

8. Photovoltaikmodul nach Anspruch 6 oder 7, wobei die Verbindungen (21a, 22a, 23a, 30a, 21b, 22b, 23b, 30b) jeder der Schichten (210, 220, 230, 300, 211, 221, 231, 301) in Reihen- oder Reihen-/Parallelschaltungen verbunden sind, um Netze mit zwei Ausgangsanschlüssen pro Schicht zu bilden, wobei die Reihen-/Parallelschaltungen dazu ausgebildet sind, die Spannungen jeder der Schichten auszugleichen, wenn die Netze parallel geschaltet sind und wenn die erste Schicht der Sonne ausgesetzt ist und die letzte Schicht nicht der Sonne ausgesetzt ist.

9. Photovoltaikmodul nach einem der Ansprüche 6 bis 8, wobei die Sperrvorrichtung aus einer Diode besteht, die zwischen einem Ausgangsanschluss des Netzes der letzten Schicht und den Ausgangsanschlüssen der anderen Schicht(en) des Mehrfachverbindungsstapels angeordnet ist.

10. Photovoltaikmodul nach einem der Ansprüche 6 bis 9, wobei die Sperrvorrichtung aus einem entfernbaren Strap oder einem Schalter besteht.

11. Photovoltaikmodul nach einem der Ansprüche 6 bis 10, wobei die relativen Alterungseigenschaften zwischen den Schichten des Moduls so sind, dass die letzte Schicht dazu ausgebildet ist, durch Umdrehen des Moduls eine höhere Nennleistung zu liefern als das gesamte Modul, wenn die Leistungsabgabe des gesamten Moduls im Laufe der Zeit unter die Leistung der letzten Schicht in sonnenzugewandter Position fällt.

12. Photovoltaikpaneel (40), umfassend wenigstens ein Photovoltaikmodul (10a, 10b) nach einem der Ansprüche 6 bis 11, umfassend Ausgangsanschlüsse (15, 15', 16, 16') der Netze des oder der Module sowohl an der Oberseite als auch an der Unterseite des Moduls.

13. Photovoltaikpaneel (40), umfassend wenigstens ein Photovoltaikmodul nach einem der Ansprüche 6 bis 11, umfassend einen das Modul umgebenden Rahmen (41), wobei der Rahmen mit einem symmetrischen Profil mit Flügeln (41a, 41b) versehen ist, die sich beiderseits der Dicke des Moduls erstrecken, so dass ein flacher Rahmen entsteht, der die vom Rahmen geworfene Verschattung sowohl in der Grundstellung als auch in der umgedrehten Stellung des Paneels begrenzt.

14. Photovoltaikpaneel nach den Ansprüchen 12 und 13, wobei die Flügel des Rahmens mit Aufnahmeräumen für eine Verbindungsdose (42) versehen sind, die dazu ausgebildet ist, sowohl an die Ausgangsanschlüsse oder -kontakte (15, 16) an der Oberseite des Moduls als auch an die Ausgangsanschlüsse oder -kontakte (15', 16') an der Unterseite des Moduls angeschlossen zu werden, um eine Überdeckung eines Teils der Fläche des Paneels, das die Verbindungen aufweist, durch die Verbindungsdose zu begrenzen.

15. Photovoltaikpaneel nach einem der Ansprüche 12 bis 14, umfassend ein Paar Strahlungssensoren (50, 51, 50', 51') auf jeder Seite einer Ebene (P) des Moduls.

16. Photovoltaikpaneel nach Anspruch 15, wobei das Paar von Strahlungssensoren (50', 51') an einem Arm (52) an einer Außenseite des Moduls angeordnet ist.

17. Computerprogramm mit Anweisungen zur Durchführung des Verfahrens nach einem der Ansprüche 1 bis 5, wenn dieses Programm von einem Prozessor ausgeführt wird.

18. Nicht transitorischer, computerlesbarer Datenträger, auf dem ein Programm zur Durchführung des Verfahrens nach einem der Ansprüche 1 bis 5 gespeichert ist, wenn dieses Programm von einem Prozessor ausgeführt wird.

## Claims

1. Method for lifetime optimization a two-sided photovoltaic module (10, 10') comprising at least one multi-junction stack (20, 20'), for which a first side of the module, under which is located a first junction layer (21) of said stack, is exposed to the sun at the beginning of life of the module in a base position of the module, referred to as first-life position, and for which a last junction layer (30) of said multi-junction stack, of two-sided type is arranged under a second side of the module not exposed to the sun receiving diffuse and reflected light under the module and also a part of light passing through the stack, **characterized in that** it comprises:
a. measuring (100) a first irradiance IRᵤₚ on the side of the module exposed to the sun and a second irradiance IR_{low} on the side of the module not exposed to the sun, when the first side of the module is exposed to the sun;
b. measuring (110) the output power P_{FM} from the full module;
c. calculating (120) the estimated output power P_{E1} of each junction layer of the multi-junction stack taken individually when the first side is the side exposed to the sun;
d. calculating (130) an estimated output power for said last junction layer P_{LL} of the module as a function of the first irradiance in a turned over position of the module, called second-life position, where the second side of the module becomes the side exposed to the sun and the first side of the module becomes the side not exposed to the sun;
e. comparing (140) said estimated output power of said last junction layer P_{LL} with the output power of the full module P_{FM} measured when the first side is the side of the module exposed to the sun,
to provide a recommendation for turning over (150) the module when the output power of the full module P_{FM} in the base position becomes less than the estimated output power of said last junction layer P_{LL} in the turned over position of the module.

2. Method for optimization according to claim 1, comprising, in base position, a comparison (116) of the estimated output power from said stack of junctions P_{stack} with initial output power data Pᵢₙᵢ from said stack of junctions with the same irradiance IR_{ref} in order to determine a degradation of said stack of junctions.

3. Method for optimization according to claim 2 wherein the initial output power data are irradiance/power IR_{ref}/Pᵢₙᵢ pairs which can be obtained during a prior step (90) of storing irradiance/resulting power pairs obtained for various irradiance values of said junction at the start of life of the module.

4. Method for optimization according to any one of the preceding claims, comprising a step of turning over (160) the module.

5. Method for optimization according to claim 4, comprising a period of monitoring (165) the improvement of the yield from the turned over module and a step of validation or not (170) of said turning over as a function of the improvement or not of said yield.

6. Multi-junction photovoltaic module suited to the method from any one of the preceding claims **characterized in that** it comprises a first stack of a first junction layer under a first side of the module and a last layer of bifacial junctions under a second side of the module, where said first layer allows a part of the light spectrum to pass towards said last layer or a second stack (20) of a plurality of layers of junctions of decreasing bandgaps (21, 22, 23, 24) starting from said first side, for which the first layer (21) is a first layer of the module arranged under said first side where said second stack is arranged under a final layer of bifacial junctions (30) of the module and allowing a part of the light spectrum to pass from said first layer towards said last layer and **in that** it comprises an inhibition device (14) at at least one of the output terminals of said last layer or of said plurality of layers of junctions of decreasing bandgaps (21, 22, 23, 24) except said last layer (300, 301) when the module is in turned over position with said last layer exposed to the sun.

7. Photovoltaic module according to claim 6 wherein the junctions of the different layers (2, 22, 23, 30) have different surface areas or wherein the layers comprise a different number of junctions.

8. Photovoltaic module according to claim 6 or 7 wherein the junctions (21a, 22a, 23a, 30a, 21b, 22b, 23b, 30b) of each of the layers (210, 220, 230, 300, 211, 221, 231, 301) are connected in series or series/parallel networks in order to implement networks with two output terminals per layer, where said series/parallel networks are suited for balancing the voltages of each of the layers when said networks are connected in parallel and when the first layer is exposed to the sun and the last layer is not exposed to the sun.

9. Photovoltaic module according to any one of claims 6 to 8 wherein the inhibition device is made up of a diode inserted between an output terminal of the network from the last layer and the output terminals from the one or more other layers of the multi-junction stack.

10. Photovoltaic module according to any one of claims 6 to 9 wherein the inhibition device is made up of a removable strap or a switch.

11. Photovoltaic module according to any one of claims 6 to 10 wherein the relative aging characteristics between the layers of the module are such that the last layer is suited, by turning the module over, to deliver a nominal power greater than the whole module when the yield curve is a function of time of the whole module becomes less than the yield of the last layer in position facing the sun.

12. Photovoltaic panel (40) comprising at least one photovoltaic module (10a, 10b) according to any one of claims 6 to 11 and comprising output pads or contacts (15, 15', 16, 16') for the networks for the module(s) both on the upper surface and on the lower surface of the module.

13. Photovoltaic panel (40) comprising at least one photovoltaic module according to any one of claims 6 to 11 and comprising a frame (41) surrounding the module, for which the frame is provided with a symmetric profile provided with wings (41a, 41b) extending from both sides of the thickness of the module so as to make a low-profile frame limiting the shade cast by the frame both when the panel is in base position and when the panel is in turned over position.

14. Photovoltaic panel according to claims 12 and 13 wherein the wings of the frame are provided with spaces for receiving a junction box (42) suited for connection to both the output pads or contacts (15, 16) on the upper side of the module or to the output pads or contacts (15', 16') on the lower side of the module so as to limit covering of part of the side of the panel comprising the junctions by said junction box.

15. Photovoltaic panel according to any one of claims 12 to 14 comprising a pair of irradiance sensors (50, 51, 50', 51') for each side of a plane (P) of the panel.

16. Photovoltaic panel according to claim 15 wherein the pair of irradiance sensors (50', 51') is located on an arm (52) on an outer side of the panel.

17. Computer program comprising instructions for implementing the method according to any one of claims 1 to 5 when this program is executed by a processor.

18. Nonvolatile computer readable recording medium on which a program is recorded for implementing the method according to any one of claims 1 to 5 when this program is executed by a processor.
